# EUROPEAN PATENT SPECIFICATION

(11) **EP 3 097 246 B1**
(45) Date of publication and mention of the grant of the patent: **30.08.2017**
(21) Application number: 14701557.2
(22) Date of filing: 28.01.2014
(51) Int. Cl.: E06B 9/68, G05B 15/02

(54) **SMART FENESTRATION PRODUCT SYSTEM HAVING REMOTE CONTROL**
INTELLIGENTES FENSTERSYSTEM AUFWEISEND EINE FERNSTEUERUNG
SYSTÈME DE FERMETURE INTELLIGENT POUR FENÊTRE, AVEC TÉLÉCOMMANDE

(43) Date of publication of application: 30.11.2016
(73) Proprietor: University of Maribor, 2000 Maribor (SI)
(72) Inventor: HADZISELIMOVIC, Miralem, Volicina (SI); CHOWDHURY, Amor, Kamnica (SI); KOTNIK, Bojan, Celje (SI)
(74) Representative: Becker Kurig Straus
(86) International application number: PCT/EP2014/051622
(87) International publication number: WO 2015/113592

(56) References cited:
- WO-A1-2013/052083
- DE-U1- 29 924 615
- US-A1- 2001 027 846
- US-A1- 2003 150 164
- US-A1- 2010 332 034
- US-A1- 2011 090 077
- US-A1- 2011 282 496
- US-A1- 2012 130 513
- US-A1- 2013 117 078

## Description

### Technology field

This invention belongs to the field of access control, remote control, sensor systems and smart fenestration products (like windows, doors, skylights or similar building elements) system management via a mobile phone, web-based interface or with the use of short-range contactless technology (contactless cards, pendants, etc.). In particular, the invention relates to a smart fenestration product (like window, door or similar building element) system having remote control and management means to be operated by user's mobile phone, other mobile devices or a web interface device.

### Technical problem

Fenestration products like windows or doors are important components of every home. The basic function of doors is to enable access to the interior of a facility, flat or room, while windows primarily provide natural lighting and ventilation of the interior of a facility, flat or room. Both doors and windows however also present a particular security challenge, because they enable potential access also to undesired/unauthorised persons. Another challenge presented by windows and doors are energy losses of the building. Every window or door has an important influence on the energy balance of the whole building: in the winter a significant percentage of heat from the interior is lost through windows and doors, while in the summer heat from the outside is transmitted inside through windows and doors and warms up premises while the user is trying to cool temperatures by air-conditioning. Ventilation in the winter also contributes to negative energy balance. Ventilation or fresh air supply is important also in the winter, but energy-wise it is a complete loss. It is therefore important to find a compromise between optimal ventilation and acceptable energy loss.

The technical problem dealt with in the subject invention is the design of energy autonomous smart home windows, doors or other fenestration products with integrated access control, remote control and management and various included sensors of environmental and security parameters. The proposed system provides the user with simple and comprehensive smart home windows and doors management via a mobile phone, tablet or another mobile device through any web interface from any place.

Modern mobile phones (or tablets) are nowadays an ubiquitous and very widely used communication device, which due to its high processor power, different supported modes of connectivity such as GPRS (General Packet Radio Service), UMTS (Universal Mobile Telecommunications System), WLAN (Wireless Local Area Network), IrDA (Infrared Data Association), NFC (Near Field Communication), Bluetooth and similar, highly efficient operation systems and easy-to-use user interfaces enable installation and start-up of different user software. One aim of the subject invention is to exploit all the mentioned capacities and qualities of mobile phones and other communication infrastructures for an additional mobile phone function, i.e. using it as an interface for wireless control and management of smart windows and doors in a smart home.

Similar to mobile phones, the World Wide Web (www) also enables global connectivity. Web-based solutions have a great advantage over dedicated communication software, because they enable execution of various interactions through any internet browser, regardless of the type of device (personal computer, tablet, mobile phone, etc.) and the type of operation system. In the proposed smart home windows and doors control and management system a web application will enable remote control and management either independently or with a mobile phone application. When designing the system it is of key importance to eliminate any possibility of unauthorised access to smart home windows and doors system. All users must register his/her user name and password to be able to use remote control and management.

### State of technology

From US 2003/150164 A1 there is known a wireless barrier-edge monitor device and method for detecting an obstacle. From US 2010/332034 A1 there is known a system and method for an electrical insulating shutter system. From US 2001/027846 A1 there is known an awning assembly and control system. From US 201317 77078 A1 there is known a virtual attendant system and parking management system. From DE 29924615 U1 there is known a sun shading device having adaptable panels. From WO 2013/052083 A1 there is known method to control architectural opening covering assemblies.

The EP0452154 A2 having title "Remote control of window blinds and the like" describes the principle of remote control of blinds with the use of a transmitter - controller, based on infrared (IR) signal transfer. Blinds position control system has an electric motor and is connected to AC power.

The subject invention differs significantly from the conventional patent application EP0452154 A2 insofar as it enables a range of additional smart window functionalities, such as various sensors monitoring, window position monitoring, alarm functions support and window components control (lock, shades) with the help of user's mobile phone or a web browser. Our proposed patent application also enables direct user interaction with the use of NFC technology or sound modulated data. In the proposed patent application power supply for smart window control electronics can be provided with a photovoltaic cell, integrated in the window or door frame.

Prior art document US 20120130513 A1 having title "Smart home device management" describes a smart home design which includes remote control and managing of various home appliances with the use of a mobile communication device.

US 20120301642 A1 having title "Smart window" describes the design and construction of a so called smart window, which can control the amount of sunlight passing through it.

The abovementioned conventional patent application refers mainly to window glass chemical composition or structure and thus deals with a field different from proposed solution.

US 20130061542 A1 having title "Photovoltaic window assembly with solar control properties" describes the design and construction of a window, which enables photovoltaic properties on the entire glass surface.

US 8337039 B1 having title "Window frame with integrated solar electric cell and illumination" describes integration of a photovoltaic cell in the external part of a window frame and the use of stored electric energy for the purpose of lighting the interior of the room.

EP 2217779 B1 having title "Window handle or door handle with position monitoring for monitoring room climate and ventilation behaviour" describes the construction of a window handle with integrated position, relative humidity and temperature sensors with the purpose of optimal control of room ventilation, heating and cooling.

EP 0949597 B1 having title "Mechanical window or door lock of a remote-controlled security apparatus for objects" describes a mechanism of a battery-charged security window and door locks with wireless control system and status messaging on the basis of RF signal transmission or reception.

The subject invention differs significantly from US 20120130513 A1 insofar as it mainly focuses on advanced control and control of smart energy-autonomous window which aside from remote managing and control also supports direct user interaction with NFC technology. Also, it enables autonomous operation of smart window or door control electronics without central control unit or data connection (internet).

### Summary of the invention

The invention proposes a product according to claim 1, a system of claim 9 and a method of claim 15. Preferred embodiments are mentioned in the subclaims.

Subject invention according to one aspect describes the possibility of integrating a photovoltaic cell into window or door frame and using the generated electric energy as power supply for smart window electronics.

The subject invention according to another aspect describes the possibility of integrating different sensors (temperature, inclination, glass breaking, rain, lighting and fingerprint capture sensors etc.) into a smart window. Also the data acquired from these sensors are not primarily intended for ventilation control.

An aspect of the smart home fenestration products (windows or doors, etc) management and control system and procedure is that it enables remote access control and management with the use of a mobile phone, tablet or a web interface.

Further aspects, advantages and features of the invention are described in the following description of exemplary embodiments in conjunction with the drawings, in which
Fig. 1 shows the basic components of one embodiment of the subject invention.
Fig. 2 shows the construction of a smart window having built-in control means.
Fig. 3 shows the construction of smart window control electronics.
Fig. 4 shows a block diagram of the mobile phone application algorithm.

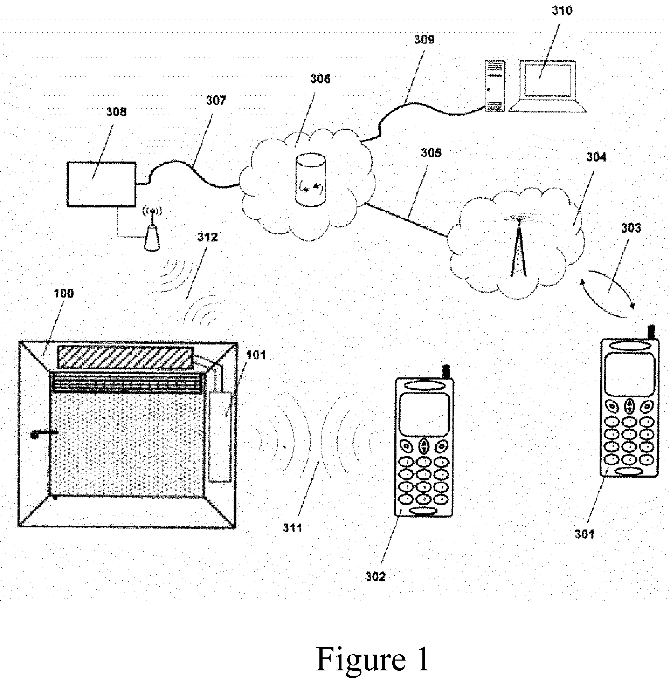

The proposed system may consist of several components, an example of which is shown in Figure 1. The basic components in this embodiment are:
- control electronics 101 with autonomous photovoltaic power supply inside the fenestration product (like window or door) frame 100 and an integrated radio-frequency (RF) and/or acoustic transmitter/receiver module,
- central control unit 308 with a radiofrequency (RF) transmitter/receiver module and/or wireless or wired network connection WLAN or LAN 307,
- mobile application for system management, which runs on a mobile phone, tablet or another mobile device 301 or 302,
- web application for system management running on any web browser on any device which enables web surfing 310,
- sensor units built in or built on fenestration product connected with the control electronics 101,
- actuator units built in or built on fenestration product connected with the control electronics 101.

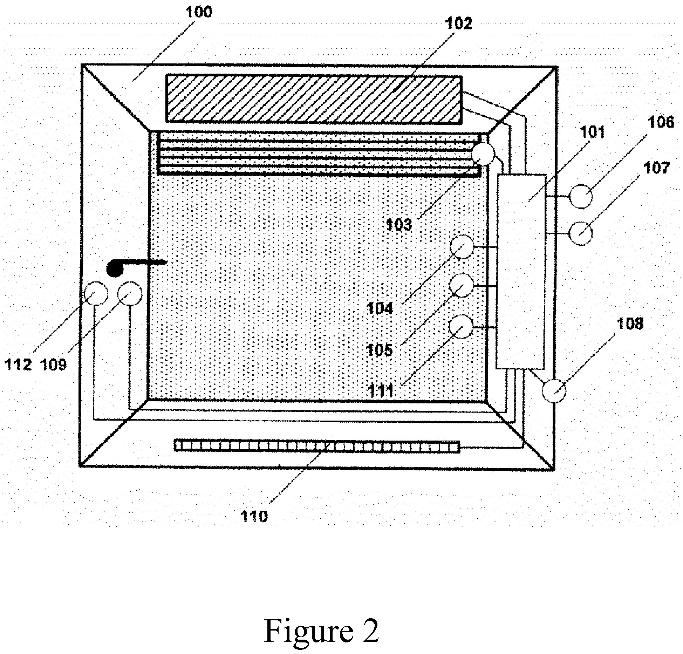

A detailed description of a proposed construction of a smart window 100 is provided in Figure 2. In the frame of a fenestration product (for example of every window or inside every door) a special electronic control circuit is built in. Electronic control circuit power supply is provided with a battery which is built in the window or inside the door frame in such a way that it can be replaced. The battery is continuously being recharged through photovoltaic cells 102, built in the external side of the window or door frame. The integration of the photovoltaic cell 102 in this patent may be done aesthetically, i.e. so that the cell does not stand out from the window or door frame and looks like a part of the window frame or the external surface of the door. In a second version an external AC power supply can be connected so that no battery or photovoltaic cells are used. The variant with external AC power supply is preferable also in cases of built-in actuators for opening windows/doors, for tilting windows or lowering and lifting the shades (roller blinds, blinds) for opening, closing shutters or changing their inclination. Alternatively, a battery and/or a photovoltaic cell may be combined with an external power supply, so that for example the external power supply is used in cases of low light or low battery level, while the external power supply is shut off as long as sufficient energy levels are provided by the photovoltaic cell.

Control electronics 101, built into the fenestration product (for example window or door) frame, may detect the status of one or more different sensors connected to it, and forward their status to central control unit 308. Control electronics may for example perform at least a part of the following functionalities:
- detecting and reporting the state of the fenestration product 108, 109 (closed, open, tilted),
- detecting and reporting the state of shades 103 (shutters, rolling blinds, blinds, etc.),
- detecting and reporting of glass breaking 104,
- detecting and reporting internal 105 and external temperatures 106,
- detecting lighting 111,
- capturing user's fingerprints 112,
- detecting and reporting precipitation (rain) 107,
- regular reporting on control electronics activity status and integrity 101,
- control of ventilation dampers 110 according to requests from the central control unit 308.

It will be understood that for each of the described sensor functionalities, a corresponding sensor may be present in the fenestration product. These may for example be humidity sensors, thermometers, photodiodes, imaging sensors, vibration or shock sensors, tilt sensors, gyroscopes, lock state sensors, fingerprint sensors, touchpads, magnetic sensor and similar. Also, one sensor may be capable of covering a number of separate control events; in other cases, several sensors may be working together for providing one reported event (e.g. a photodiode and a tilt sensor).

Control electronics 101 built into the fenestration product (window or door) 100 can also serve as an independent unit without a central control unit. In this case it is possible to connect to the control electronics for example an alarm siren (also built into the window or door frame) or a communication module, which enables direct communication 311 with user's mobile phone 302 through the following interfaces:
- Bluetooth,
- WLAN (Wifi) module,
- communication through sound modulated signals (acoustic set),
- contactless NFC technology.

Also, the control electronics 101 may work with or without a central control unit for certain tasks only. For example, it is conceivable that any light and ventilation sensor readings are detected and reported to the central control unit without further processing in a first step, while a detection of breaking glass also triggers an event of another device coupled directly to the control electronics, such as the described alarm siren. That is, any detected sensor input can be processed locally at the control electronics 101, forwarded without further processing to another unit such as the central control unit 308, used as a trigger for devices connected to the control electronics 101 and/or the central control unit 308, stored at the control electronics and/or the central control, either separately or in combination.

Control electronics may for example function together with central control unit 308 or in an access control mode. For this purpose it can have inbuilt communication interfaces 311 such as Bluetooth, WLAN, communication through sound modulated signals, infrared, and/or contactless NFC technology. This enables direct user interaction with his/her mobile phone 302 or a contactless smart card. For the purpose of opening doors control electronics needs to be connected also with electronic lock's electronics 109.

Central control unit 308 may enable safe multi-channel two-directional radio-frequency communication with smart window 100 control electronics 101. It may also enable wired or wireless connection 307 with WLAN or LAN network 306. Central control unit 308 gathers sent data of all control electronics of a smart home and reports their status on request of a mobile application running on a mobile device 301 or request of a web application running on a device 310 connected via wired or wireless connection with WLAN or LAN network 306. Central control unit can also be programmed for independent operation.

Managing and operating a smart fenestration product (for example a window or door) 100 with the help of a mobile application on a mobile device 301 may proceed as follows. Mobile application is connected through one of data connections (GPRS, UMTS) 303 enabled by the mobile operator's network 304 or internet connection 305 with a home network 306. Mobile application 301 can also connect via WLAN directly to a home network 306, which in turn is coupled with the central control unit. Alternatively, a direct connection may be provided between the mobile device 301 and a central control unit 308 via any type of connection interface. Via mobile application the user can send commands and receive responds to/from control electronics 101, either directly or through the central control unit 308. Via the same mobile application the user can also configure the parameters of central control unit operation. A user can also communicate using his/her mobile phone 302 where such mobile application is installed directly with smart window control electronics through one of the wireless connection 311 options:
- contactless NFC technology,
- Bluetooth technology,
- reproduction and capture of sound modulated data,
- wireless WLAN network.

The mobile application running on a mobile device may provide a user with a choice of connecting to the central control unit or connecting directly to an interface of a specific fenestration product. Also, if a mobile device is able to detect the presence of a network connection of a smart fenestration product, such as an active NFC or Bluetooth interface of a door, the mobile application may choose the communication channel automatically. For example, a user mobile device 301 or 302 may connect to the NFC interface of a smart door in order to unlock and open the door upon authentification; then, the mobile device may connect automatically or on request to the central control unit in order to close all shades for a number of windows, which are all connected to the central control unit.

In alternative embodiments, the mobile application may run all commands and instruction through the central control unit.

Instead of (or combined with) a mobile application running on any mobile device, smart cards or chip electronics which are able to connect to an interface of a fenestration product may be used.

Also, instructions received at the central control unit may be stored for later use.

The central control unit and/or the control electronics of a single fenestration product may comprise rules for deciding whether a specific command received from a user mobile device may override an automatic event controlled by the control electronics or the central control unit. For example, a central control unit may be programmed to automatically close all windows if the internal temperature is outside certain predefined values; however, if a user provides a command via his mobile device or via an input device connected to one of the control elements to ignore this automatic event, one or more windows may be opened on request. Similar procedures may be defined for other sensors and applications.

Also, rules may be defined to determine whether commands given by the central control unit to the control electronics of a smart fenestration device may be overriden by a direct command received locally from a mobile device without including the transmission path of the central control unit.

Control electronics 101 can also operate in the so called alarm mode. This means that in case forced opening or glass breaking is detected, control electronics triggers an alarm which is sent either via central control unit 308 or directly to user's mobile phone. Via mobile application 301 or 302 the user can also configure various other control electronics parameters and operation modes (precipitation notification, monitoring external and internal temperatures, monitoring shades position etc.).

The control electronics may also monitor whether all of the connected sensors and actuators are in operation, and if one of the sensors or actuators fails, it may send a report to the central control unit 308 or to a user device. Alternatively, an indicator may be included into the smart fenestration product, such as a LED or display, which is able to indicate the functioning state of all components of the product. Further, the control electronics may also be configured to monitor the state and correct functioning of the power supply, such as a battery charge level.

Since all fenestration elements within one area may be connected to one central control unit, it is possible to define rules where a state of one of the fenestration products controls or influences the state of further fenestration products. For example, if a smart door detects locking by a user, either mechanically or electronically, the central control unit may receive a report of this locking event and may then send commands in order to close all smart windows in the house and to activate an alarm. Again, these rules and commands might also be defined and changed via the mobile application on a mobile phone or device, such that a user is also able to remotely change the behaviour of all smart fenestration products as desired using a mobile or wireless network.

In addition to the sensors included in each of the fenestration products, further sensors may be provided which are in direct or indirect connection with the control elements. In one example embodiment, lighting sensors may be mounted at suitable locations throughout a house, for example at important spots of a room. If the sensors indicate that the lighting conditions within the room are insufficient, the central control unit may instruct the relevant windows in this room to open the shades.

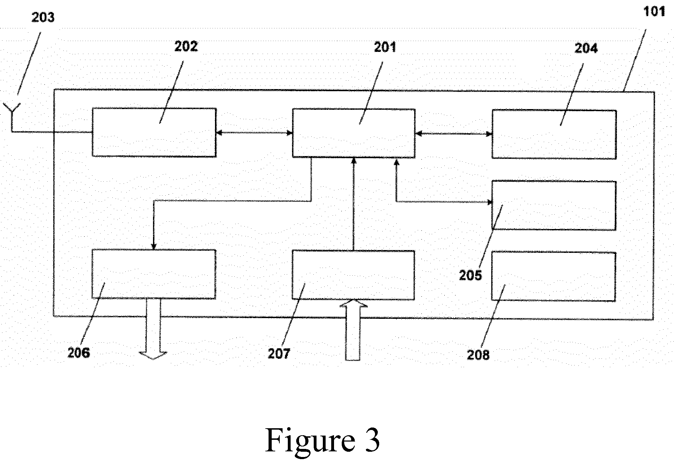

Figure 3 shows the construction of smart fenestration product (for example window) 100 control electronics 101. Power supply module 208 ensures power supply for the entire control electronics. In the first version, module 208 may comprise a battery which is controllably charged with the use of a photovoltaic panel 102. In the second version module 208 may include an AC/DC adapter and use AC power. Battery can also be used in case of AC power supply and may serve as backup power supply in case of power failure.

The central module of control electronics 101 is the central processing unit (CPU) 201. It basically executes pre-programmed actions and/or makes decisions according to input parameters and commands sent by the user or by a central control unit 308. Central processing unit 201 is connected with external rewritable drive (FLASH, EEPROM, EPROM, GAL, PAL or similar) 205, where configuration parameters and control electronics settings are saved. Optionally, the central processing unit may also be configured to store some or all of the collected sensor data at the rewritable drive or another storage device, such that sensor data is only transmitted in predefined intervals or when action is required. Central processing unit 201 is further connected to radio-frequency communication unit 202 with an antenna 203. The radio-frequency unit 202 with its antenna 203 ensures wireless connection between control electronics and the central processing unit as well as direct connection of control electronics with user's mobile phone 302 through one of data transfer options: WLAN, Bluetooth. Control electronics also includes NFC communication unit 204 with an in-built NFC antenna and an acoustic set for transfer of sound modulated data to/from a mobile phone. NFC technology ensures direct contactless communication with a mobile phone, which needs to also support NFC technology, or with a contactless smart card. Different integrated window sensors (open/closed position, locked state, inclination sensors, glass breaking sensor, blinds position sensor, lighting and rain sensors, fingerprint capture sensor) are connected to input peripheral interface unit 207. Output peripheral interface unit 206, which is also connected to the central processing unit 201, manages different actuators, such as electronic lock 109, ventilation gaps and dampers control and shades control 103.

Control electronics software 101 can be updated in various ways: for example, they might be updated via central control unit 308 and radio-frequency communication unit 202 or via contactless NFC communication enabled by the NFC unit 204.

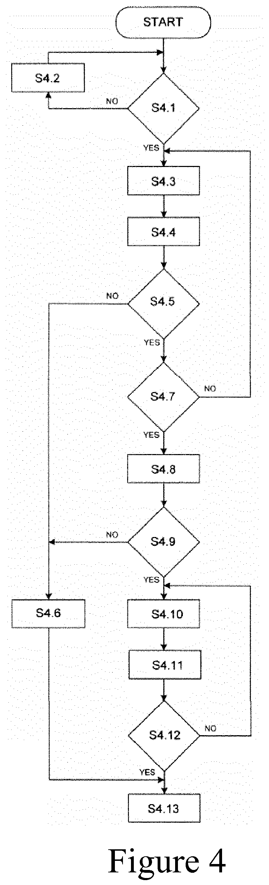

Figure 4 shows a block diagram of the mobile phone application algorithm. The user starts the application (START) by choosing the application from the mobile phone's 301 or 302 menu. At the start up and initialization of the mobile application, the algorithm in decision S4.1 first checks whether user's data has already been entered into application settings (whether the user is registered). If the user has not yet registered, user registration is performed in step S4.2. Once the user is registered, the application demands that the user enters his/her PIN or security password in step S4.3. After PIN or password is entered, user data is prepared in step S4.4 (control sum calculation, encrypting) and connection with central control unit 308 or directly with control electronics is enabled. If connection with central control unit or control electronics is unsuccessful (decision S4.5) the application reports the status to the user in step S4.6 and closes in step S4.13. If mobile application's connection with the central control unit is successful, the latter returns the user identity verification result. If the user is registered and verified by the central control unit (decision S4.7) connection with central control unit is established in step S4.8, which is connected with the chosen smart window or door 100 control electronics 101. If user identity is not verified, the application moves to step S4.3, where the user needs to re-enter his/her PIN (this can be repeated at most three times, then the application closes), In decision S4.9 the system checks whether connection with the chosen control electronics was successful. If an error occurred the procedure continues with step S4.6 as described above. If the connection is successful mobile application goes to user mode of smart window or door management in step S4.10, where the user can adjust the settings of control electronics 101 management and control. In step S4.11 management and control data is exchanged between the control electronics and the mobile application running on a mobile device 301 or 302. In step S4.12 the system checks whether the user chose the "stop/close application" option. Application is closed in step S4.13.

By using an additional identification element such as a fingerprint sensor, either at a fenestration product or at a mobile device adapted for controlling the fenestration product system, security features can be enhanced. For example, the system may be configured such that changes to the settings and command regarding the fenestration system are only enabled if a user has been successfully verified with fingerprints. Alternative options are e.g. a keypad or identification card. In one embodiment, a front door of a house may be equipped with a fingerprint sensor. The successful verification of the fingerprint might then, as defined in the central control unit, both open the front door for the user and at the same time put the fenestration control system into a state which allows changes by user commands. In some embodiments, the remote control option via web or mobile application may be activated or deactivated on a user's command.

It will be understood that the term fenestration product includes any type of door or window as commonly used in housing, but also similar elements such as sliding doors, skylights, curtain walls, ventilation openings, garage doors, movable glass panes and others. In general, a fenestration product may comprise any product which fills an opening in a building envelope and is designed to permit the passage of air, light, people and/or vehicles. The type and location of both sensors and actuators used in one of these products will depend on the type of product; for example, ventilation windows may be provided with a temperature sensor, vibration sensors for detecting wind, rain sensors and actuators for variably opening or closing the ventilation portion; a front door may then rather be provided with a fingerprint sensor, a lock state sensor, a NFC and/or Bluetooth receiver, a keypad, and a glass breaking sensor. All these are just examples for sensor and actuator combinations and shall not be understood as limiting. Of course, any desirable combination of sensors and actuators as previously described is conceivable.

The sensors, actuators and other components may be provided in any suitable part of a smart fenestration product. They may be included in a frame, in locks, hinges, on the door or window element itself, or in other suitable locations. They may be integrated into frames such that they do not change the look or behaviour of the fenestration element, for example by being included within the frame material of a window. Also, sensors, actuators and control/communication elements of the device may be mounted on different parts of a smart fenestration product, such that the more sensitive parts (e.g. control electronics) might be integrated within a frame or located on the inside, while a communication interface element is located such that a user may easily reach it for near field communication purposes, or such that an antenna of the interface has optimum reception quality.

## Claims

1. A smart fenestration product (100) comprising:
- control electronics (101) built into the fenestration product;
- a battery for supplying power to the control electronics;
- photovoltaic cells (102) being connected to said said battery for recharging the battery;
- at least one sensor connected to said control electronics;
- at least one actuator connected to said control electronics and adapted to actuate a portion of said fenestration assembly;
- at least one data communication interface connected to said control electronics (101);
wherein said control electronics (101) is adapted to receive and process data detected by said at least one sensor, and wherein said control electronics (101) is further adapted to transmit said detected data via said data communication interface, and further to control said at least one actuator based on said detected data and/or based on instructions received via said data communication interface,
- wherein said control electronics (101) is adapted to receive and process instructions from a central control unit (308) and a mobile device and is further adapted to decide whether a received instruction from said mobile device overrides a control based on said detected data and/or a control based on instructions received from said central control unit (308), wherein said control electronics (101) is adapted to carry out the following sensor functionalities :
- detecting and reporting the state of the fenestration product (908, 109),
- detecting and reporting the state of shades (103),
- detecting and reporting of glass breaking (104),
- detecting and reporting internal (105) and external temperatures (106),
- detecting lighting (111),
- capturing user's fingerprints (112),
- detecting and reporting precipitation (107),
- regular reporting on control electronics activity status and integrity (101),
- control of ventilation dampers (110) according to requests from the central control unit (308).

2. The smart fenestration product of claim 1, wherein said at least one data communication interface includes a first and second data communication interface, wherein said first data communication interface is adapted to communicate with said central control unit, and said second data communication interface is adapted to communicate with said mobile device.

3. The smart fenestration product of any previous claim, further comprising at least one of a photovoltaic cell, a battery, a rechargeable battery, and an external power supply connection for power supply.

4. The smart fenestration product of any previous claim, wherein said communication interface is one of a radio-frequency communication interface, a mobile communication network interface, a Bluetooth interface, an infrared interface, a Near Field Control interface, and an acoustic transfer interface.

5. The smart fenestration product of any previous claim, wherein said control electronics (101) comprises at least:
- a central processing unit (201);
- a rewritable storage element for storing configuration parameters and control electronics settings (205);
- an input peripheral interface unit (207) coupled between said at least one sensor and said central processing unit (201);
- an output peripheral interface unit (206) coupled between said at least one actuator and said central processing unit (201), wherein said configuration parameters and/or control electronics settings are adapted to be updated via said data communication interface.

6. The smart fenestration product of any previous claim, wherein said at least one sensor is adapted for at least one of the following:
- detection of a position or inclination of said fenestration product;
- detection of a position of shades mounted on said fenestration product;
- detection of breaking glass;
- detection of an internal and/or external temperature;
- detection of a fingerprint of a user;
- detection of lighting conditions;
- detection of precipitation.

7. The smart fenestration product of any previous claim, wherein said at least one sensor is one of a thermometer, a photodiode, an imaging sensor, a tilt sensor, a gyroscope, a fingerprint sensor, a rain sensor, a microphone, a vibration sensor, a humidity sensor, a motion sensor, a touch sensor.

8. The smart fenestration product of any previous claim, wherein said at least one actuator is one of a shades control actuator (103), an electronic lock (109), a ventilation control valve.

9. A smart fenestration product system, comprising at least one smart fenestration product according to any one of the previous claims, and further comprising said central control unit (308) including a first data communication interface, the central control unit being adapted to receive and process data from said at least one smart fenestration product via said first data communication interface.

10. The smart fenestration product system of claim 9, said central control unit (308) comprising at least a second data communication interface for transferring data and/or instructions related to said fenestration products.

11. The system of claim 10, wherein said second data communication interface of said central control unit is adapted to communicate with an application running on a mobile device, a mobile phone, or a web application.

12. The system of any of claims 10 and 11, wherein said central control unit is further adapted to process and/or forward instructions received via said second data communication interface to at least one of said smart fenestration products.

13. A smart fenestration product system, comprising at least one smart fenestration product according to any one of claims 1 to 8, further comprising at least one mobile device running a mobile application adapted for receiving and transmitting instructions and/or data directly to and from said control electronics (101) of said at least one smart fenestration product.

14. The system of claim 13, wherein said mobile device is further adapted to communicate with a central control unit (308) coupled to at least one of said smart fenestration product systems, wherein said mobile application is adapted to allow for selecting whether communication is performed via said central control unit or directly with said smart fenestration product.

15. A method comprising
receiving, via a data communication interface, a second command related to control of a smart fenestration system,
deciding, based on predefined rules, whether said second command overrides a previously set control,
wherein said previously set control is based on a first command received from a different device and/or based on data detected via a sensor,
controlling, in accordance with said decision, an actuator of said smart fenestration system according to one of claims 9-14.

## Patentansprüche

1. Intelligentes Fensterbauprodukt (100), umfassend:
- eine Steuerelektronik (101), die in das Fensterbauprodukt eingebaut ist;
- eine Batterie zum Zuführen von Energie zu der Steuerelektronik;
- Photovoltaikzellen (102), die an die Batterie angeschlossen sind, um die Batterie wiederaufzuladen;
- mindestens einen Sensor, der an die Steuerelektronik angeschlossen ist;
- mindestens ein Stellglied, das an die Steuerelektronik angeschlossen ist und geeignet ist, um einen Teil der Fensterbaubaugruppe zu betätigen;
- mindestens eine Datenkommunikationsschnittstelle, die an die Steuerelektronik (101) angeschlossen ist;
wobei die Steuerelektronik (101) geeignet ist, um Daten zu empfangen und zu verarbeiten, die durch den mindestens einen Sensor detektiert werden, und wobei die Steuerelektronik (101) ferner geeignet ist, um die detektierten Daten über die Datenkommunikationsschnittstelle zu senden, und ferner um das mindestens eine Stellglied basierend auf den detektierten Daten und/oder basierend auf Anweisungen, die über die Datenkommunikationsschnittstelle empfangen werden, zu steuern,
- wobei die Steuerelektronik (101) geeignet ist, um Anweisungen von einer zentralen Steuereinheit (308) und einer mobilen Vorrichtung zu empfangen und zu verarbeiten, und ferner geeignet ist, um zu entscheiden, ob eine empfangene Anweisung von der mobilen Vorrichtung eine Steuerung basierend auf den detektierten Daten und/oder eine Steuerung basierend auf Anweisungen, die von der zentralen Steuereinheit (308) empfangen werden, außer Kraft setzt, wobei die Steuerelektronik (101) geeignet ist, um die folgenden Sensorfunktionen durchzuführen:
- Detektieren und Melden des Zustands des Fensterbauprodukts (108, 109),
- Detektieren und Melden des Zustands von Rollläden (103),
- Detektieren und Melden von Glasbruch (104),
- Detektieren und Melden von internen (105) und externen Temperaturen (106),
- Detektieren der Beleuchtung (111),
- Aufnehmen der Fingerabdrücke (112) eines Benutzers,
- Detektieren und Melden von Niederschlag (107),
- regelmäßiges Melden des Aktivitätsstatus und der Integrität (101) der Steuerelektronik,
- Steuerung von Lüftungsklappen (110) gemäß Anfragen von der zentralen Steuereinheit (308).

2. Intelligentes Fensterbauprodukt nach Anspruch 1, wobei die mindestens eine Datenkommunikationsschnittstelle eine erste und zweite Datenkommunikationsschnittstelle umfasst, wobei die erste Datenkommunikationsschnittstelle geeignet ist, um mit der zentralen Steuereinheit zu kommunizieren, und die zweite Datenkommunikationsschnittstelle geeignet ist, um mit der mobilen Vorrichtung zu kommunizieren.

3. Intelligentes Fensterbauprodukt nach einem der vorhergehenden Ansprüche, ferner umfassend mindestens eine von einer Photovoltaikzelle, einer Batterie, einer wiederaufladbaren Batterie und einer externen Energieversorgungsverbindung für die Energieversorgung.

4. Intelligentes Fensterbauprodukt nach einem der vorhergehenden Ansprüche, wobei die Kommunikationsschnittstelle eine von einer Hochfrequenz-Kommunikationsschnittstelle, einer mobilen Kommunikationsnetz-Schnittstelle, einer Bluetooth-Schnittstelle, einer Infrarot-Schnittstelle, einer Nahfeld-Steuerschnittstelle und einer akustischen Transferschnittstelle ist.

5. Intelligentes Fensterbauprodukt nach einem der vorhergehenden Ansprüche, wobei die Steuerelektronik (101) mindestens Folgendes umfasst:
- eine Zentraleinheit (201);
- ein wiederbeschreibbares Speicherelement zum Speichern von Konfigurationsparametern und Steuerelektronik-Einstellungen (205);
- eine Eingabeperipheriegeräte-Schnittstelleneinheit (207), die zwischen dem mindestens einen Sensor und der Zentraleinheit (201) gekoppelt ist;
- eine Ausgabeperipheriegeräte-Schnittstelleneinheit (206), die zwischen dem mindestens einen Stellglied und der Zentraleinheit (201) gekoppelt ist, wobei die Konfigurationsparameter und/oder die Steuerelektronik-Einstellungen geeignet sind, um über die Datenkommunikationsschnittstelle aktualisiert zu werden.

6. Intelligentes Fensterbauprodukt nach einem der vorhergehenden Ansprüche, wobei der mindestens eine Sensor geeignet ist für mindestens eine von einer;
- Detektion einer Position oder Neigung des Fensterbauprodukts;
- Detektion einer Position der Rollläden, die an dem Fensterbauprodukt montiert sind;
- Detektion von zerbrochenem Glas;
- Detektion einer internen und/oder externen Temperatur;
- Detektion eines Fingerabdrucks eines Benutzers;
- Detektion von Beleuchtungsbedingungen;
- Detektion von Niederschlag.

7. Intelligentes Fensterbauprodukt nach einem der vorhergehenden Ansprüche, wobei der mindestens eine Sensor eines ist von einem Thermometer, einer Photodiode, einem Bildgebungssensor, einem Neigungssensor, einem Gyroskop, einem Fingerabdrucksensor, einem Regensensor, einem Mikrofon, einem Vibrationssensor, einem Feuchtigkeitssensor, einem Bewegungssensor und einem Berührungssensor.

8. Intelligentes Fensterbauprodukt nach einem der vorhergehenden Ansprüche, wobei das mindestens eine Stellglied eines von einem Rollladen-Steuerstellglied (103), einem elektronischen Schloss (109) und einem Belüftungssteuerventil ist.

9. Intelligentes Fensterbauproduktsystem, umfassend mindestens ein intelligentes Fensterbauprodukt nach einem der vorhergehenden Ansprüche, und ferner umfassend die zentralen Steuereinheit (308), die eine erste Datenkommunikationsschnittstelle umfasst, wobei die zentrale Steuereinheit geeignet ist, um Daten von dem mindestens einen intelligenten Fensterbauprodukt über die erste Datenkommunikationsschnittstelle zu empfangen und zu verarbeiten.

10. Intelligentes Fensterbauproduktsystem nach Anspruch 9, wobei die zentrale Steuereinheit (308) mindestens eine zweite Datenkommunikationsschnittstelle zum Übertragen von Daten und/oder Anweisungen bezüglich der Fensterbauprodukte umfasst.

11. System nach Anspruch 10, wobei die zweite Datenkommunikationsschnittstelle der zentralen Steuereinheit geeignet ist, um mit einer Anwendung, die auf einer mobilen Vorrichtung läuft, einem Handy oder einer Web-Anwendung zu kommunizieren.

12. System nach einem der Ansprüche 10 und 11, wobei die zentrale Steuereinheit ferner geeignet ist, um Anweisungen, die über die zweite Datenkommunikationsschnittstelle empfangen werden, zu verarbeiten und/oder an mindestens eines der intelligenten Fensterbauprodukte weiterzuleiten.

13. Intelligentes Fensterbauproduktsystem, umfassend mindestens ein intelligentes Fensterbauprodukt nach einem der Ansprüche 1 bis 8, ferner umfassend mindestens eine mobile Vorrichtung, auf der eine mobile Anwendung läuft, die geeignet ist, um Anweisungen und/oder Daten direkt von der Steuerelektronik (101) des mindestens einen intelligenten Fensterbauprodukts zu empfangen und an diese zu senden.

14. System nach Anspruch 13, wobei die mobile Vorrichtung ferner geeignet ist, um mit einer zentralen Steuereinheit (308) zu kommunizieren, die mit mindestens einem der intelligenten Fensterbauproduktsysteme gekoppelt ist, wobei die mobile Anwendung geeignet ist, um die Auswahl zu ermöglichen, ob eine Kommunikation über die zentrale Steuereinheit oder direkt mit dem intelligenten Fensterbauprodukt erfolgt.

15. Verfahren, umfassend folgende Schritte:
Empfangen, über eine Datenkommunikationsschnittstelle, eines zweiten Befehls bezüglich der Steuerung eines intelligenten Fensterbausystems,
Entscheiden, basierend auf vordefinierten Regeln, ob der zweite Befehl eine zuvor eingestellte Steuerung außer Kraft setzt,
wobei die zuvor eingestellte Steuerung auf einem ersten Befehl basiert, der von einer anderen Vorrichtung empfangen wird, und/oder auf Daten, die über einen Sensor detektiert werden, basiert,
Steuern, gemäß der Entscheidung, eines Stellglieds des intelligenten Fensterbausystems nach einem der Ansprüche 9 bis 14.

## Revendications

1. Système de fermeture de fenêtre intelligent (100) comprenant :
- une électronique de commande (101) incorporée dans le système de fermeture de fenêtre ;
- une batterie pour alimenter électriquement l'électronique de commande ;
- des cellules photovoltaïques (102) étant connectées à ladite batterie pour recharger la batterie ;
- au moins un capteur connecté à ladite électronique de commande ;
- au moins un actionneur connecté à ladite électronique de commande et adapté pour actionner une portion dudit système de fermeture de fenétre ;
- au moins une interface de communication de données connectée à ladite électronique de commande (101) ;
dans lequel ladite électronique de commande (101) est adaptée pour recevoir et traiter les données détectées par le dit au moins un capteur et dans lequel ladite électronique de commande (101) est en outre adaptée pour transmettre lesdites données détectées via ladite interface de communication de données et commander en outre ledit au moins un actionneur sur la base lesdites données détectées et/ou sur la base des instructions reçues via ladite interface de communication de données,
- dans lequel ladite électronique de commande (101) est adaptée pour recevoir et traiter des instructions provenant d'une unité de commande centrale (308) et un dispositif mobile et est en outre adaptée pour décider si une instruction reçue depuis ledit dispositif mobile supplante une commande basée sur lesdites données détectées et/ou une commande basée sur les instructions reçues depuis ladite unité de commande centrale (308), dans lequel ladite électronique de commande (101) est adaptée pour mettre en oeuvre les fonctionnalités de capteur suivantes :
- détecter et rapporter l'état du système de fermeture de fenêtre (108, 109),
- détecter et rapporter l'état des volets (103),
- détecter et rapporter le verre brisé (104),
- détecter et rapporter les températures internes (105) et externes (106),
- détecter l'éclairage (111),
- capturer les empreintes digitales de l'utilisateur (112),
- détecter et rapporter les précipitations (107),
- rapporter régulièrement le statut d'activité et l'intégrité de l'électronique de commande (101),
- commander les registres de ventilation (110) conformément aux demandes provenant de l'unité de commande centrale (308).

2. Système de fermeture de fenêtre intelligent selon la revendication 1, dans lequel ladite au moins une interface de communication de données inclut une première et une seconde interface de communication de données, dans lequel ladite première interface de communication de données est adaptée pour communiquer avec ladite unité de commande centrale et ladite seconde interface de communication de données est adaptée pour communiquer avec ledit dispositif mobile.

3. Système de fermeture de fenêtre intelligent selon une quelconque des revendications précédentes, comprenant en outre au moins une d'une cellule photovoltaïque, une batterie, une batterie rechargeable et une connexion d'alimentation électrique externe pour l'alimentation électrique.

4. Système de fermeture de fenêtre intelligent selon une quelconque des revendications précédentes, dans lequel ladite interface de communication est une d'une interface de communication à radiofréquence, une interface de réseau de communication mobile, une interface Bluetooth, une interface infrarouge, l'interface de commande à champ proche et une interface de transfert acoustique.

5. Système de fermeture de fenêtre intelligent selon une quelconque des revendications précédentes, dans lequel ladite électronique de commande (101) comprend au moins :
- une unité de traitement centrale (201),
- un élément de mémoire réinscriptible pour mémoriser les paramètres de configuration et les réglages électroniques de commande (205) ;
- une unité d'interface périphérique d'entrée (207) couplée entre ledit au moins un capteur et ladite unité de traitement central (201) ;
- une unité d'interface périphérique de sortie (206) couplée entre ledit au moins un actionneur et ladite unité de traitement centrale (201), dans lequel lesdits paramètres de configuration et/ou réglages électroniques de commande sont adaptés afin d'être mis à jour via ladite interface de communication de données.

6. Système de fermeture de fenêtre intelligent selon une quelconque des revendications précédentes, dans lequel ledit au moins un capteur est adapté pour au moins une des suivants :
- la détection d'une position ou de l'inclinaison dudit système de fermeture de fenètre ;
- la détection d'une position des volets montés sur ledit produit de fermeture de fenêtre ;
- la détection du verre brisé ;
- la détection d'une température interne et/ou externe ;
- la détection d'une empreinte digitale d'un utilisateur ;
- la détection de conditions d'éclairage ;
- la détection de précipitations.

7. Système de fermeture de fenêtre intelligent selon une quelconque des revendications précédentes, dans lequel ledit au moins un capteur est au moins un d'un thermomètre, une photodiode, un capteur d'imagerie, un capteur d'inclinaison, un gyroscope, un capteur d'empreinte digitale, un capteur de pluie, un microphone, un capteur de vibrations, un capteur d'humidité, un capteur de mouvements, un capteur tactile.

8. Système de fermeture de fenêtre intelligent selon une quelconque des revendications précédentes, dans lequel ledit au moins un actionneur est un d'un actionneur de commande de volets (103), une serrure électronique (109), une soupape de commande de ventilation.

9. Système de fermeture de fenêtre intelligent, comprenant au moins un système de fermeture de fenêtres intelligent selon une quelconque des revendications précédentes et comprenant en outre ladite unité de commande centrale (308) incluant une première interface de communication de données, l'unité de commande centrale étant adapté pour recevoir et traiter des données provenant dudit au moins un système de fermeture de fenêtre intelligent via ladite première interface de communication de données.

10. Système de fermeture de fenêtre intelligent selon la revendication 9, ladite unité de commande centrale (308) comprenant au moins une seconde interface de communication de données pour transférer des données et/ou des instructions relatives audit système de fermeture de fenêtre.

11. Système selon la revendication 10, dans lequel ladite seconde interface de communication de données de ladite unité de commande centrale est adaptée pour communiquer avec une application s'exécutant sur un dispositif mobile, un téléphone mobile ou une application Web.

12. Système selon une quelconque des revendications 10 et 11, dans lequel ladite unité de commande centrale est en outre adaptée pour traiter et/ou acheminer des instructions reçues via ladite seconde interface de communication de données vers au moins un desdits systèmes de fermeture de fenêtre intelligent.

13. Système de fermeture de fenêtre intelligent, comprenant au moins un produit de fermeture de fenêtre intelligent selon une quelconque des revendications 1 à 8, comprenant en outre au moins un dispositif mobile exécutant une application mobile adaptée pour recevoir et transmettre les instructions et/ou des données directement vers et depuis ladite électronique de commande (101) dudit au moins un produit de fermeture de fenêtre intelligent.

14. Système selon la revendication 13, dans lequel ledit dispositif mobile est en outre adapté pour communiquer avec une unité de commande centrale (308) couplée à au moins un desdits systèmes de fermeture de fenêtre intelligent, dans lequel ladite application mobile est adaptée pour permettre la sélection que la communication est effectuée via ladite unité de commande centrale directement avec ledit produit de fermeture de fenêtre intelligent.

15. Procédé comprenant de :
recevoir, via une interface de communication de données, une seconde commande relative à la commande d'un système de fermeture de fenêtre intelligent,
décider, sur la base de règles prédéfinies, que ladite seconde commande supplante une commande précédemment réglée,
dans lequel ladite commande précédemment réglée est basée sur une première commande reçue depuis un dispositif différent et/ou basée sur les données détectées via un capteur,
commander, conformément à ladite décision, un actionneur dudit système de fermeture de données intelligent selon une des revendications 9-14.
